# EUROPEAN PATENT APPLICATION

(11) **EP 1 580 168 A1**
(43) Date of publication of application: **28.09.2005**
(21) Application number: 03812330.3
(22) Date of filing: 28.11.2003
(51) Int. Cl.: C02F 3/10, C02F 3/06, A01K 63/04

(54) **AQUARIUM-CLEANING DEVICE UTILIZING FORMED CHARCOAL**

(30) Priority: 29.11.2002 JP 2002347447
(71) Applicant: Asahi Breweries, Ltd., Tokyo 104-0031 (JP)
(72) Inventor: Okamoto, Hiroyuki, Asahi Breweries, Ltd, Moriya-shi, Ibaraki 302-0106 (JP); Sakai, Toshio, Asahi Breweries, Ltd., Moriya-shi, Ibaraki 302-0106 (JP); Inoue, Masao, Toride-shi, Ibaraki 302-0022 (JP); Yamasaki, Shuichi, Kashiwa-shi, Chiba 277-0832 (JP); Ishida, Seiji, Hachioji-shi, Tokyo 193-0823 (JP); Tsuneda, Satoshi, Nerima-ku, Tokyo 179-0085 (JP); Hirata, Akira, Setagaya-ku, Tokyo 157-0072 (JP)
(74) Representative: Ziebig, Marlene
(86) International application number: PCT/JP2003/015216
(87) International publication number: WO 2004/050565

(57) **Abstract**

An aquarium-cleaning device, particularly an aquarium-cleaning device in which spent grain charcoal is used as formed charcoal. The formed charcoal provided by drying, forming, and carbonizing organic substances produced in food industries is used as a microorganism carrier. Such problems with a conventional device that the structure of the aquarium-cleaning device is complicated, the washing operation thereof is troublesome, and a filter medium must be frequently replaced can be solved by using the spent grain charcoal performing higher water-quality purification than a conventional activated charcoal as an aquarium-cleaning material.

## Description

### Technical Field

The present invention relates to an aquarium-cleaning device having function for long-term cleaning of turbid sewage or water from sewage disposal to increase the water transparency.

### Background Art

Hitherto, aquariums used for pet fishes or breeding fishes almost have attached water-quality purification devices. However, filters of the devices should be often changed. In the aquariums for the pet fishes, the fishes are kept for a long time, so that bait dregs contaminate water. It is necessary to change the water routinely.

To clean the aquarium, a cleaning medium using an activated charcoal is practically used. The conventional cleaning medium using the activated charcoal can clean water in the aquarium. However, when the activated charcoal is added in water, the increased pH of water easily leads fish to death at an early stage. Before using the activated charcoal in aquarium, it should be sufficiently washed. There is inconvenience that water transparency is lowered.

As the cleaning device of the aquarium for pet fishes, a device comprising the first and the second filter vessels in which biological filter mediums are contained is disclosed. The first filter vessel has a drain opening and the second filter vessel has an air inflow apparatus (Japanese Patent Laid-open Hei 7-236389). Further a filter vessel of an aquarium for breeding fishes is disclosed (Japanese Patent Laid-open 2001-314136). The vessel filters the water for breeding fishes with the first filter medium comprising a combustion charcoal of corn refuse and the second filter medium comprising a healstone without microorganisms. On the other hand, the applicant of the present invention has disclosed a device for compression and forming of spent grain material without an adhesive (Japanese Laid-open 2000-33496). An automated system for carbonizing spent grains provides a combustion material having high quality that is non-deformable and homogeneous (Japanese Patent Laid-open 2001-240864). In the filter devices of aquariums disclosed in publications of Japanese Patent Laid-open Hei 7-236389 and Japanese Patent Laid-open 2001-314136, the filters need plural filter vessels and several kinds of filter mediums, so that the devices have problems that the devices are complex. In such devices, the structure of water-quality purification devices is complicated, the washing operation is troublesome, and the filter mediums require replacing frequently.

The present invention aims to solve the problems by using organic substances produced in food industries such as the spent grain charcoal performing higher water-quality purification than a conventional activated charcoal as an aquarium-cleaning material.

### Disclosure of Invention

The present invention provides an aquarium-cleaning device using as a microorganism carrier the formed charcoal provided by drying, forming, and carbonizing organic substances produced in food industries. The formed charcoal is one or more kinds of spent grains charcoal, tea grounds charcoal, coffee grounds charcoal, plum seed charcoal, yeast charcoal and yeast cell wall charcoal. The aquarium is an aquarium-cleaning device for pet fish, breeding fish or culturing fish. As a water-quality purification material, the formed charcoals disclosed in the above patent references 3 and 4 are preferably used, particularly the aquarium-cleaning material produced by using a carbonization technique of spent grains is provided.

### Brief Description of Drawings

Fig. 1 shows an oblique drawing of a cleaning device of a bottom surface type of an aquarium for pet fish in example 1 of this invention.
Fig. 2 shows an oblique drawing of a cleaning device of a box type of an aquarium for pet fish in example 2 of this invention.
Fig. 3 shows a graph of T-N (total nitrogen weight) with the lapse of day in examples 1 and 2.
Fig. 4 shows a graph of TOC (dissolved organic concentration) with the lapse of day in examples 1 and 2.
Fig. 5 shows a graph of pH with the lapse of day in examples 1 and 2.
Fig. 6 shows a graph of light scattering in examples 1 and 2.
Fig. 7 shows a graph of NO₃ -N and TOC with the lapse of time in example 3.

Numbers in figures are as shown in the following.

1: filter of bottom surface, 2: spent grain charcoal, 3: induction mouth, 4: pump, 5: draining mouth, 6: feeding water, 7: feeding aquarium, and 8: purification device.

### Best Mode for carrying Out the Invention

The formed charcoal of the raw material in this invention is obtained by drying, forming, and carbonizing organic substances produced in food industries. As the raw material of the organic substances, organic wastes such as spent grains, tea grounds, coffee grounds, plum seed, yeast and yeast cell wall can be used. For producing formed charcoal, it is possible to use the device for forming spent grain charcoal disclosed in the above Japanese Patent Laid-open 2000-33496 and the system for carbonizing spent grains disclosed in the above Japanese Patent La-d-open2001-240864. As to the plum seed, the forming process can be omitted. Since the carbonized substances contain minerals, these are well adapted for growth medium of bacteria. The bacteria work to delete nitrogen and organic constituents and clean water. Since the carbonized substances are formed charcoals having above 1 of true density, it is characterized in that the substances are easily treatable in water.

Preferred embodiments of this invention are disclosed in the following examples, but it is not intend to limit to these examples.

### Example 1

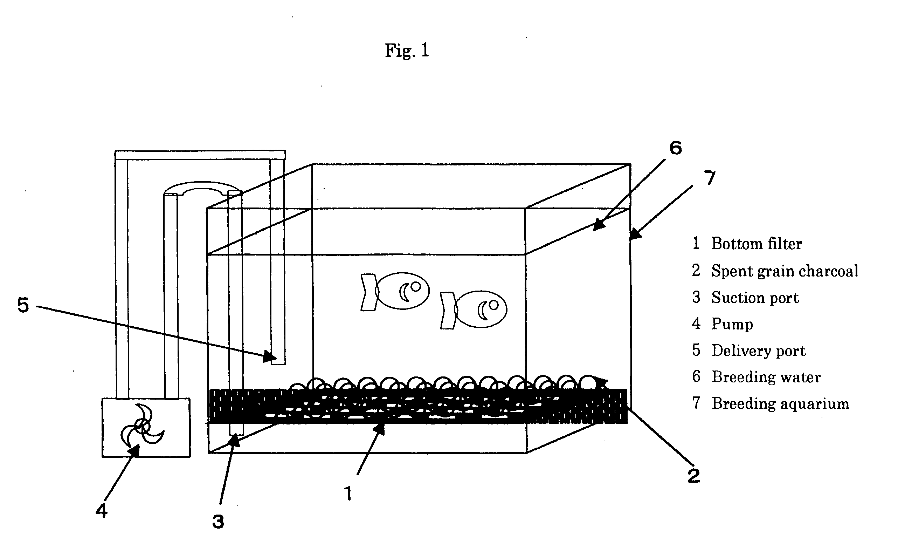

Examples of this invention are disclosed in Fig. 1.
As shown in Fig. 1, in breeding aquarium 7 of 450mm × 300mm × 300mm, a cleaning device of a filter system of a bottom surface type (manufactured by Nisso Co.) was provided by covering 3000cm² with carriers having particle sizes of 5 -10mm. In breeding aquarium 7, 25 little of breeding water 6 of city water left one day after pumping and 10 goldfishes were contained. The goldfishes were fed once a day. Air exposure volume was 400ml/min, circulation water volume was 1.5L/min, and the water temperature was 22°C . T-N (total nitrogen weight) , TOC (dissolved organic concentration) and lapse day change of pH were determined. When a goldfish was died, a goldfish was added in the system. Aquariums were formed by using bottom surface filter 1 covered with spent grain charcoal 2 (malt ceramics, abbreviated as MC in the following), activated charcoal and gravel.

### Example 2

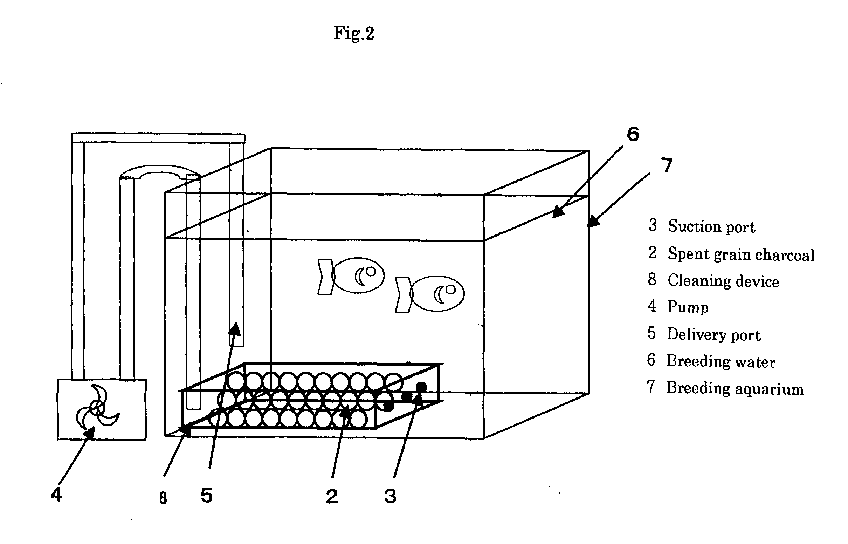

As shown in Fig. 2, in breeding aquarium 7 of 450mm × 300mm × 300mm, a cleaning device 8 of a filter system of an acrylic box type was provided by covering 3000cm² with MC carriers having particle sizes of 5 -10mm. In breeding aquarium 7, 25 little of breeding water 6 of city water left one day after pumping and 10 goldfishes were contained. The goldfishes were fed once a day. Air exposure volume was 400ml/min, circulation water volume was 1.5L/min, and the water temperature was 22°C. T-N (total nitrogen weight) , TOC (dissolved organic concentration) and lapse day change of pH were determined. When a goldfish was died, a goldfish was added in the system.

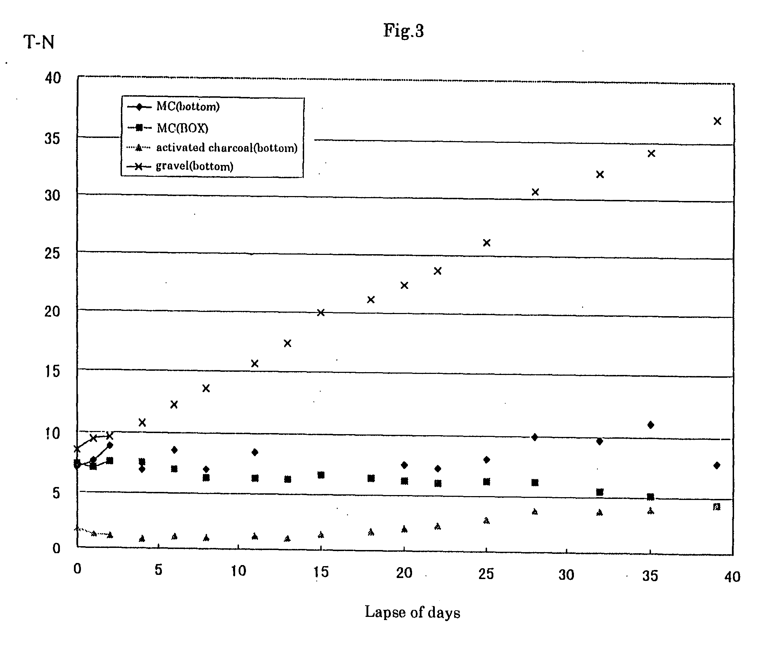

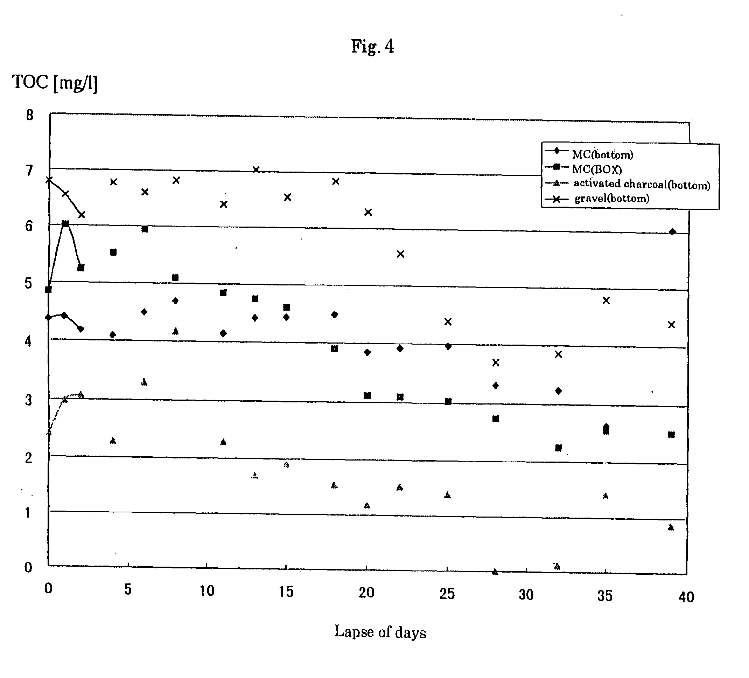

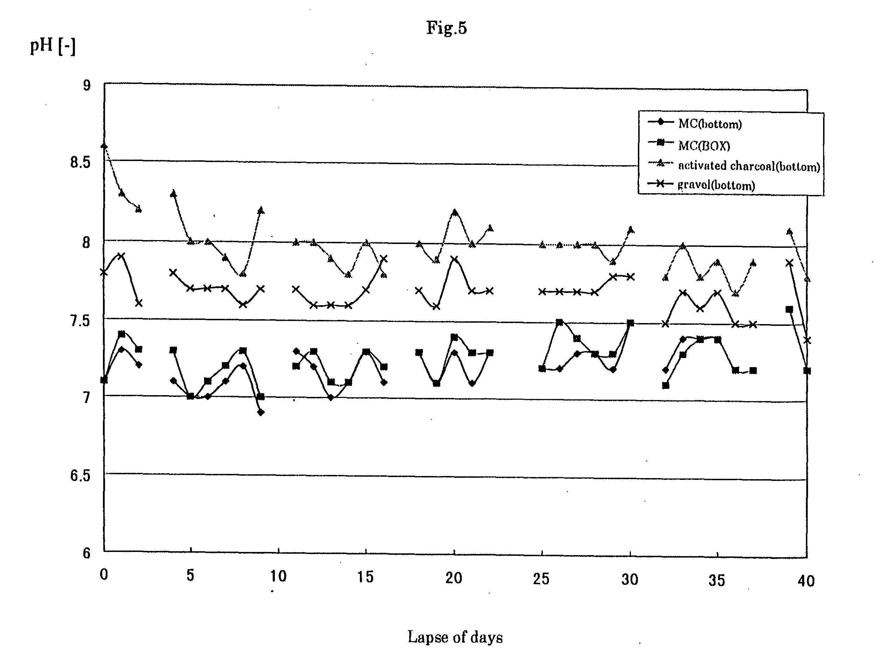

As to each aquarium of examples 1 and 2, water-quality for 40 days of the breeding was tested. The results of T-N (total nitrogen weight) in Fig. 3, the results of TOC (dissolved organic concentration) in Fig. 4 and pH in Fig. 5 were shown. From these figures, T-N was increased continuously by using gravel as the carrier, but it was maintained in low concentration by using activated charcoal and MC. TOC was maintained lower concentration by using charcoal and MC than by using gravity. pH tended to increase by using activated charcoal at the beginning of the use. Such environment was not good for organisms. By using MC, pH was neutral from the beginning and the environmental was good for organisms.

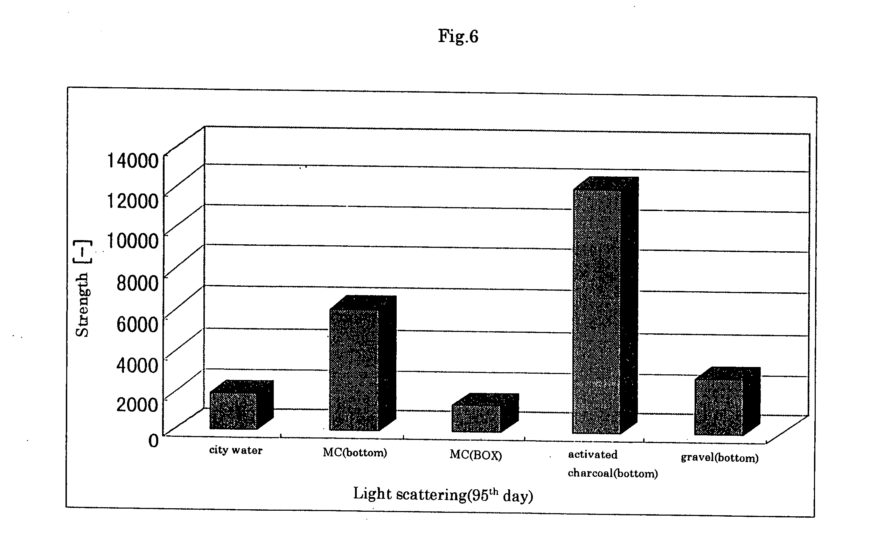

In Fig. 6, the results of light scattering after breeding of 95 days were shown.

The light scattering was measured with an electrophoretic light scattering instrument (manufactured by Otsuka Densi Co., ELS-8000). The results were shown by the mean of 100 times of measurement of the scattering in the water after breeding 70 days (cps=Counter per Second). The strength was 1941 in city water, 6087 at the bottom surface in MC, and 1422 in the box type, 12100 in the activated charcoal and 2904 in the gravity. From these results, good water transparency was shown in MC of the box type, and low water transparency was shown in the activated charcoal.

### Example 3

The effect of formed charcoal of spent grains (MC) was examined by decomposition of a nitrate type nitrogen (NO₃ -N). In the experiment, four Erlenmeyer flasks of volume 500cm³ were prepared, and MC 50cm³ and pure water 450cm³, activated charcoal 50cm³ and pure water 450cm³, MC extract (obtained by dipping MC 50cm³ into pure water 450cm³ for 3 days and removing MC), and pure water 450cm³ as a blank were added into each flask. For comparing each experiment condition, four flasks were abbreviated as MC-3, AC-3, MC-4 and Blank hereinafter. In each flask, C₆H₁₂O₆, KNO₃ and denitrificans were added to adjust TOC into 2,000mg/dm³ and NO₃-N into 900mg/dm³, and the mixture was shaked for 72 hours at 130rpm. The denitrificans used herein were obtained from Hirata laboratory of Applied Chemistry, Faculty of Science and Engineering, Waseda University, Japan. Concentration of TOC and NO₃ -N were measured during the shake every 1-6 hours.

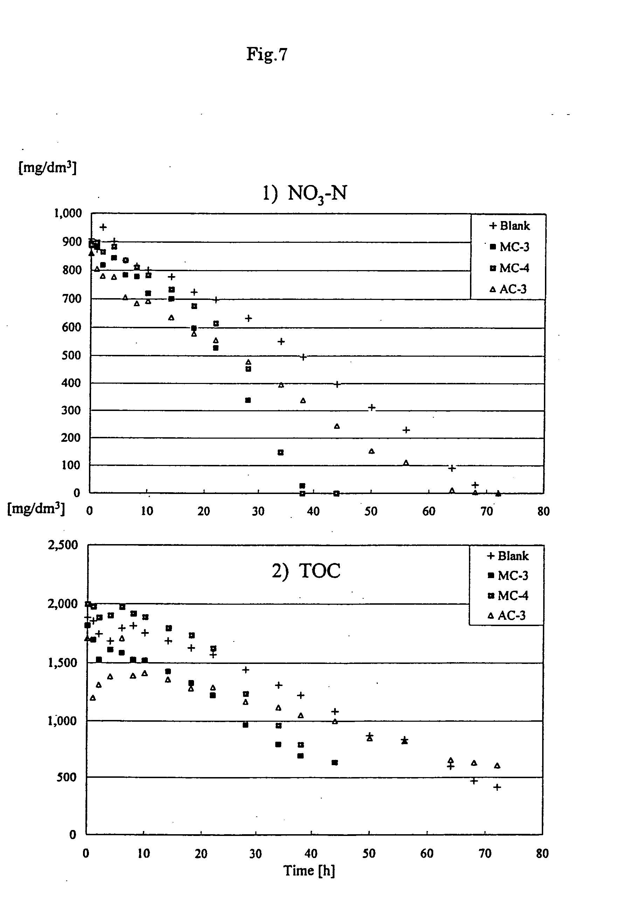

Fig. 7 shows sequential change of NO₃ -N and TOC in the experiment for measuring the decomposition rate of denitrificans. At the beginning of the experiment, AC-3 shows a high concentration-lowering rate in both NO₃ -N and TOC. However, after 20 hours, MC-3 shows higher concentration-lowering rate than that of AC-3. MC-4 shows also similar results after 30 hours. The time in which the NO₃ -N concentration reaches to 0 was about 44 hours in MC-3 and MC-4, about 68 hours in AC-3, and about 72 hours in the blank. Comparing NO₃ -N concentration in MC-3 and MC-4, the concentration in MC-3 changes at relatively lower values. However, the essential decomposition time was equal in MC-3 and MC-4. Since the essential decomposition time was equal, it was considered that the decomposition of NO₃ -N was accelerated by the constituents eluting from MC carriers increasing or activating microorganisms in the solution.

Further, it was found that, when the total phosphorus weight was measured at the beginning of each experiment and after 72 hours, the constituents such as phosphorus eluted from MC influenced against the activation of microorganisms.

### Merits of this invention

According to this invention, from above-mentioned experiments, it was found that the formed charcoal of spent grains was apparently superior to the gravel in capability for cleaning nitrogen and organisms, and equal to the activated charcoal.

Comparing with the activated charcoal, pH of the formed charcoal of spent grains was low in water and maintainable around neutrality. The transparency of water tends to increase, particularly, the tendency was prominent by using the box type developed by this inventors. Accordingly, it was found that the aquarium-cleaning device utilizing the formed charcoal, particularly, the combination with the box type had the best effect for maintaining higher water quality.

The feed water, which was cleaned with the aqualium-cleaning medium obtained from the formed charcoal of the spent grains, had the same scattering as that of city water before the pet fish was fed. Accordingly, it was found that the feed water was not turbid.

## Claims

1. An aquarium-cleaning device in which the formed charcoal provided by drying, forming, and carbonizing organic substances produced in food industries is used as a microorganism carrier.

2. An aquarium-cleaning device as claimed in claim 1, the formed charcoal is selected from one or more kinds of spent grain charcoal, tea grounds charcoal, coffee grounds charcoal, plum seed charcoal, yeast charcoal and yeast cell wall charcoal.

3. An aquarium-cleaning device as claimed in claim 1, the aquarium is used for pet fish, feeding fish, or culturing fish.

4. An aquarium-cleaning device using as a microorganism carrier the plum seed charcoal obtained by drying and carbonizing plum seeds.

5. An aquarium-cleaning device as claimed in claim 4, the aquarium is used for pet fish, feeding fish, or culturing fish.
